(19) Europäisches Patentamt

European Patent Office

Office européen des brevets

(11) EP 1 640 692 A1

(12) **EUROPEAN PATENT APPLICATION**

(43) Date of publication:
29.03.2006 Bulletin 2006/13

(51) Int Cl.:
*G01D 5/353* (2006.01)

(21) Application number: 04447207.4

(22) Date of filing: 22.09.2004

(84) Designated Contracting States:
AT BE BG CH CY CZ DE DK EE ES FI FR GB GR HU IE IT LI LU MC NL PL PT RO SE SI SK TR
Designated Extension States:
AL HR LT LV MK

(71) Applicant: Faculté Polytechnique de Mons
7000 Mons (BE)

(72) Inventors:
• Caucheteur, Christophe
7300 Boussu (BE)

• Wuilpart, Marc
1420 Braine l'Alleud (BE)
• Megret, Patrice
7301 Hornu (BE)

(74) Representative: Van Malderen, Joelle
pronovem - Office Van Malderen
Avenue Josse Goffin 158
1082 Bruxelles (BE)

(54) **Method for evaluating the influence of temperature and strain on the spectrum reflected by fibre bragg grating.**

(57) The present invention is related to a method for evaluating temperature and/or strain affecting a fibre Bragg grating (FBG), comprising the steps of

- determining the spectrum reflected by the FBG,
- determining the degree of polarisation (DOP) for the reflected spectrum,
- selecting a first DOP minimum, being the DOP minimum located between the two main peaks in the reflected spectrum, a second and a third DOP minimum being the closest DOP minima at each side of said first DOP minimum,

- monitoring the evolution of the first DOP minimum and the evolution of the distance between the second and the third minimum in response to a change in temperature and/or strain,
- evaluating temperature and/or strain using information obtained from the previous step.

Fig.8

**Description**

**Field of the invention**

The present invention is related to a method for interrogating a fibre Bragg grating sensor.

**State of the art**

A fibre Bragg grating consists of a short section of optical fibre in which the core refractive index is modulated periodically. This structure acts as a highly wavelength selective reflection filter with the peak reflectivity wavelength, $\lambda_{Bragg}$, determined by the phase matching condition :

$$\lambda_{\mathrm{Bragg}} = 2n_{\mathrm{eff}}\Lambda \qquad (eq.1)$$

where $n_{eff}$ is the effective refractive index of the guided mode in the fibre core and $\Lambda$ is the period of the index modulation.

The sensing function of a fibre Bragg grating (FBG) derives from the sensitivity of both the refractive index and grating period to externally applied thermal or mechanical perturbations. Fibre Bragg grating optical sensing exploits the fact that the measured information is wavelength encoded in the reflected and transmitted spectra of the grating. The wavelength shift information can then be related to the measurand at that sensor position. The accurate determination of the -often small- wavelength shift has become a great issue since the early stage of FBG sensing work. Many techniques have been proposed for wavelength interrogation. Usually the wavelength measurement is not very straightforward. Indeed, a simple set-up using a broadband source and an optical spectrum analyser presents a limited resolution capability and lacks cost-effectiveness. Thus, the general principle is to convert the wavelength shift into an easily measured parameter such as amplitude, frequency or phase.

The use of an edge filter as interrogation scheme offers a linear relationship between the wavelength shift and the output intensity change of the filter. This approach provides a simple and low cost solution for the monitoring of the wavelength shift. The resolution remains however limited even if an all-fibre approach is implemented.

The use of matched fibre grating filters also allows to convert the wavelength information into amplitude information. This set-up, which is quite complex, needs two gratings having the same reflected Bragg wavelengths. It further requires a piezoelectric tracking system. Once again, the resolution is limited even if the uniform gratings are replaced by chirped gratings, thus enabling a direct measurement of the wavelength-encoded reflection and eliminating the need for the closed-loop servo. Another scheme based on the same principle and suffering from the same drawbacks can be made with a narrow Fabry-Perot filter.

Other set-ups, requiring more complex interrogation schemes, are relatively difficult to implement and cannot easily be used with embedded systems. Hence, the wavelength-frequency conversion, which can be achieved using an acoustic-optic tunable filter, must be controlled by a feedback loop. This is also the case when an unbalanced optical fibre Mach-Zehnder interferometer is used as a wavelength discriminator.

The use of a CCD camera to convert the wavelength into position has a major limitation in that the resolution is restraint by the number of CCD pixels.

Another problem is the cross-sensitivity between temperature and strain effects that cannot be resolved with only one grating written into a standard single mode fibre. Various schemes have thus been proposed to discriminate between these effects. One of the simplest ways is the use of a uniform grating written into a polarisation maintaining fibre (Hi-Bi FBG). Since such a fibre has a different propagation constant for the slow and fast axis, a fibre grating written into a polarisation maintaining fibre has two distinct Bragg reflection wavelengths corresponding to the two eigenmodes. Each Bragg reflection wavelength has different dependence on temperature and strain. Reference is made to patent document JP 11064119. Using this property, it is possible to separate temperature dependence from the strain one. However, if this is done with an optical spectrum analyser, the problems of low resolution and high cost still remain.

**Aims of the invention**

The present invention aims to provide an interrogation technique for fibre Bragg grating sensors that overcomes the problems of the state of the art solutions.

**Summary of the invention**

The present invention relates to a method for evaluating temperature and/or strain affecting a fibre Bragg grating (FBG), comprising the steps of

- determining the spectrum reflected by the FBG when launching light into the FBG, and the degree of polarisation (DOP) for the reflected spectrum,
- selecting a first DOP minimum, being the DOP minimum located between the two main peaks in the reflected spectrum, a second and a third DOP minimum being the closest DOP minima at each side of said first DOP minimum,
- monitoring the evolution of the first DOP minimum and the evolution of the distance between the second and the third minimum in response to a change in temperature and/or strain,
- evaluating temperature and/or strain using information obtained from the previous step.

In an advantageous embodiment determining the DOP comprises the step of calculating the Stokes parameters.

Preferably the reflected spectrum is obtained by using a tunable laser source.

In another embodiment the invention discloses a method for evaluating temperature and/or strain affecting a cascade of FBGs, wherein the steps of the method as described above are performed for each FBG of said cascade.

Preferably the strain is axial strain.

In another aspect the invention relates to a method for temperature/strain sensing of a fibre comprising a FBG, comprising the steps of

- calibrating said FBG, and
- performing the steps of the method as previously described,

In a preferred embodiment the calibration step comprises a temperature calibration and/or a strain calibration.

Preferably the angle of the input linear state of polarisation of the light launched into the FBG, is 45°.

## Short description of the drawings

Fig. 1 represents the transmitted spectrum and $s_1, s_2, s_3$ vs. wavelength. Left : theoretical evolution with $n_{eff}$=1.4521, L=6 mm, $\delta n$=2.10$^{-4}$, $\Delta n$=3.7.10$^{-4}$, v=1 and A=528.41 nm ; right : experimental measurement.

Fig. 2 represents the reflected spectrum and $s_1$, $s_2$, $s_3$ vs. wavelength. Left : theoretical evolution (same parameters as in Fig.1) and right : experimental measurement.

Fig. 3 represents the measurement set-up.

Fig. 4 represents (a) DOP in transmission vs. wavelength and (b) transmitted spectrum. Left : simulation with parameters as in Fig.1; right : experimental measurement.

Fig. 5 represents (a) DOP in reflection vs. wavelength and (b) reflected spectrum. Left : simulation with parameters as in Fig.1; right : experimental measurement.

Fig. 6 represents a grating response to a change of temperature.

Fig. 7 represents a grating response to a change of strain.

Fig. 8 represents the principle of the demodulation algorithm.

## Detailed description of the invention

The presence of circular asymmetries in the cross section of an optical fibre leads to birefringence, which is defined as the difference in refractive index ($\Delta n$) between a particular pair of orthogonal polarisation modes (called the eigenmodes or modes x and y). When a Bragg grating is written into a high birefringence fibre (i.e. a fibre with high $\Delta n$ value), the reflected and transmitted spectra are characterised by two main peaks at wavelengths given by :

$$\lambda_{B,x} = 2n_{eff,x}\Lambda \qquad (eq.2)$$

$$\lambda_{B,y} = 2n_{eff,y}\Lambda \qquad (eq.3)$$

with

$$n_{eff,x} = n_{eff} + \frac{\Delta n}{2} \qquad (eq.4)$$

$$n_{eff,y} = n_{eff} - \frac{\Delta n}{2} \qquad (eq.5)$$

where $n_{eff}$ is the effective refractive index of the fibre,

$\Lambda$ is the grating period and $\Delta n$ is the fibre birefringence.

For a bow-tie configuration the order of magnitude of $\Delta n$ is $5.10^{-4}$.

The light launched into the FBG can be represented by the following Jones vector which defines the input State Of Polarisation (SOP) :

$$\begin{pmatrix} E_{ix} \\ E_{iy} \end{pmatrix} = \begin{pmatrix} M_x e^{j\theta_x} \\ M_y e^{j\theta y} \end{pmatrix} \qquad (eq.6)$$

where $M_{x(y)}$ and $\theta_{x(y)}$ denote the amplitude and phase angles of the x(y) component of the electric field $E_i$, respectively. The Jones vectors corresponding to the transmitted $E_t$ and reflected $E_r$ signals can be written as :

$$E_t = \begin{pmatrix} E_{tx} \\ E_{ty} \end{pmatrix} = \begin{pmatrix} \tau_x M_x e^{j\theta_x} \\ \tau_y M_y e^{j\theta y} \end{pmatrix} \qquad (eq.7)$$

$$E_r = \begin{pmatrix} E_{rx} \\ E_{ry} \end{pmatrix} = \begin{pmatrix} \rho_x M_x e^{j\theta_x} \\ \rho_y M_y e^{j\theta y} \end{pmatrix} \qquad (eq.8)$$

$\tau_x(y)$ and $\rho_x(y)$ denote the transmission and reflection coefficients, respectively, of the uniform fibre Bragg grating corresponding to the mode x (mode y), the expressions of which are derived from the coupled mode theory :

$$\tau_{x(y)} = \frac{i\sqrt{\kappa^2 - \hat{\sigma}^2_{x(y)}}}{\hat{\sigma}_{x(y)} \sinh\left(\sqrt{\kappa^2 - \hat{\sigma}^2_{x(y)}}\,L\right) + i\sqrt{\kappa^2 - \hat{\sigma}^2_{x(y)}}\cosh\left(\sqrt{\kappa^2 - \hat{\sigma}^2_{x(y)}}\,L\right)} \qquad (eq.9)$$

$$\rho_{x(y)} = \frac{-\kappa \sinh\left(\sqrt{\kappa^2 - \hat{\sigma}^2_{x(y)}}\,L\right)}{\hat{\sigma}_{x(y)} \sinh\left(\sqrt{\kappa^2 - \hat{\sigma}^2_{x(y)}}\,L\right) + i\sqrt{\kappa^2 - \hat{\sigma}^2_{x(y)}}\cosh\left(\sqrt{\kappa^2 - \hat{\sigma}^2_{x(y)}}\,L\right)} \qquad (eq.10)$$

where

$$\kappa = \frac{\pi v \delta n}{\lambda} \qquad (\text{eq.11})$$

$$\sigma_{x(y)} = 2\pi n_{eff,x(y)} \left( \frac{1}{\lambda} - \frac{1}{\lambda_{B,x(y)}} \right) + \frac{2\pi}{\lambda} \delta n \qquad (\text{eq.12})$$

In these equations, $v$ is the contrast of the interference fringes, $\delta n$ is the index modulation of the FBG, $\lambda$ represents the wavelength and L the physical length of the grating. $\lambda_{B,x(y)}$ are as defined in eq.2 and 3.

The Stokes parameters $S_0$, $S_1$, $S_2$ and $S_3$ are real numbers representing the state of polarisation. They can be easily deduced from the Jones vector, e.g. for the reflected signal : $S_0 = |E_{rx}|^2 + |E_{ry}|^2$ (total power of light), $S_1 = |E_{rx}|^2 - |E_{ry}|^2$, $S_2 = 2\text{Re}[E_{rx}{}^*E_{ry}]$ and $S_3 = 2\text{Im}[E_{rx}/E_{ry}]$.

Using Eqs. (7) to (10), it is thus possible to derive theoretical expressions for the Stokes parameters. Because of the complexity of the expressions, only the results are presented obtained when the two eigenmodes are the 0 and 90° linear polarisation states and when the input SOP is the 45° linear polarisation state so that $M_x = M_y = 1/\sqrt{2}$ and $\theta_x = \theta_y = 0$. One obtains for the transmitted signal:

$$S_0 = \frac{1}{2}\left[ \frac{1}{\cos^2(A_x L) + \gamma_x^2 \sin^2(A_x L)} + \frac{1}{\cos^2(A_y L) + \gamma_y^2 \sin^2(A_y L)} \right] \qquad (\text{eq.13})$$

$$S_1 = \frac{1}{2}\left[ \frac{1}{\cos^2(A_x L) + \gamma_x^2 \sin^2(A_x L)} - \frac{1}{\cos^2(A_y L) + \gamma_y^2 \sin^2(A_y L)} \right] \qquad (\text{eq.14})$$

$$S_2 = \frac{1}{2}\left[ \frac{\cos(A_x L)\cos(A_y L) + (\gamma_x \gamma_y)\sin(A_x L)\sin(A_y L)}{(\cos^2(A_x L) + \gamma_x^2 \sin^2(A_x L))(\cos^2(A_y L) + \gamma_y^2 \sin^2(A_y L))} \right] \qquad (\text{eq.15})$$

$$S_3 = \frac{1}{2}\left[ \frac{\gamma_y \sin(A_y L)\cos(A_x L) - \gamma_x \sin(A_x L)\cos(A_y L)}{(\cos^2(A_x L) + \gamma_x^2 \sin^2(A_x L))(\cos^2(A_y L) + \gamma_y^2 \sin^2(A_y L))} \right] \qquad (\text{eq.16})$$

where

$$A_{x(y)} = \sqrt{\left| \kappa^2 - \sigma_{x(y)}^2 \right|} \qquad (\text{eq.17})$$

$$\gamma_{x(y)} = \overset{\rightharpoonup}{\sigma}_{x(y)} / A_{x(y)} \qquad (\text{eq.18})$$

For the reflected signal the Stokes parameters become :

$$S_0 = \frac{1}{2}\kappa^2 \left[ \frac{1}{\overset{\rightharpoonup}{\sigma}_x^2 + A_x^2 \cot g^2(A_x L)} + \frac{1}{\overset{\rightharpoonup}{\sigma}_y^2 + A_y^2 \cot g^2(A_y L)} \right] \qquad (\text{eq.19})$$

$$S_1 = \frac{1}{2}\kappa^2 \left[ \frac{1}{\overset{\rightharpoonup}{\sigma}_x^2 + A_x^2 \cot g^2(A_x L)} - \frac{1}{\overset{\rightharpoonup}{\sigma}_y^2 + A_y^2 \cot g^2(A_y L)} \right] \qquad (\text{eq.20})$$

$$S_2 = \frac{\kappa^2 (A_x A_y \cot g(A_x L) \cot g(A_y L) + \overset{\rightharpoonup}{\sigma}_x \overset{\rightharpoonup}{\sigma}_y)}{(\overset{\rightharpoonup}{\sigma}_x^2 + A_x^2 \cot g^2(A_x L))(\overset{\rightharpoonup}{\sigma}_y^2 + A_y^2 \cot g^2(A_y L))} \qquad (\text{eq.21})$$

$$S_3 = \frac{\kappa^2 (A_x \overset{\rightharpoonup}{\sigma}_y \cot g(A_x L) - A_y \overset{\rightharpoonup}{\sigma}_x \cot g(A_y L))}{(\overset{\rightharpoonup}{\sigma}_x^2 + A_x^2 \cot g^2(A_x L))(\overset{\rightharpoonup}{\sigma}_y^2 + A_y^2 \cot g^2(A_y L))} \qquad (\text{eq.22})$$

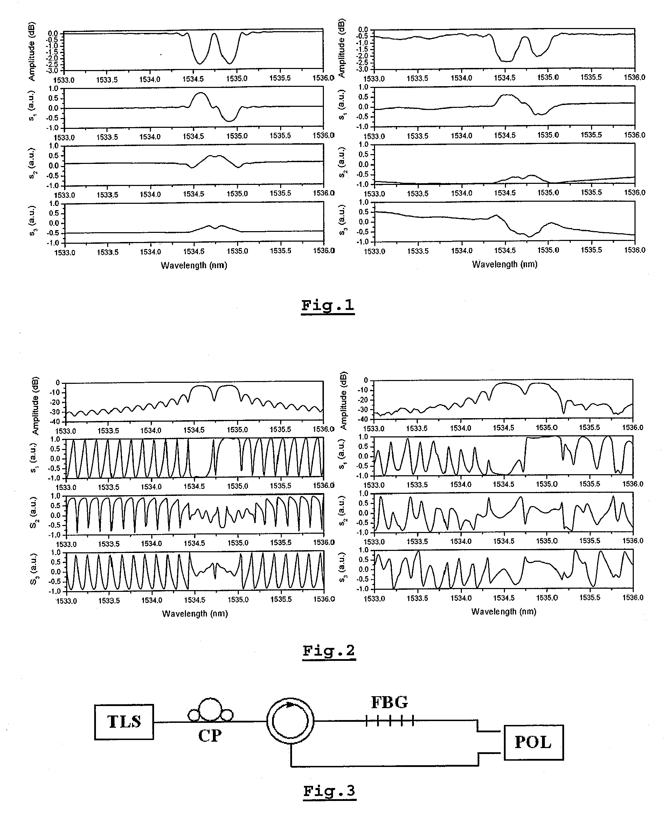

The normalised Stokes parameters $S_1$, $S_2$ and $S_3$ can be computed from the ratio $s_i = S_i/S_0$ with i=1,2,3. Figures 1 and 2 present a comparison between the theoretical and experimental evolutions of the Stokes parameters with the wavelength for the transmitted and reflected signals, respectively.

The FBG parameters used to obtain the theoretical evolutions of the Stokes parameters are chosen close to the parameters of the real FBG. The FBG parameters have been numerically evaluated from the experimental reflected spectrum using a simplex algorithm. Experimental measurements have been performed on a uniform FBG written into hydrogenated bow-tie StockerYale fibre through a 1060 nm period phase mask using a cw 244 nm BBO doubled Argon laser with 5 mm beam width and about 50 mW power.

After the annealing process the reflected and transmitted spectra of the grating are recorded by means of an optical spectrum analyser. Using a polarisation controller, the reflected peaks corresponding to the two eigenmodes are measured separately. $\lambda_{B,x}$ and $\lambda_{B,y}$ are equal to 1534.884 nm and 1534.485 nm, respectively, leading to a computed birefringence value of 3.78 $10^{-4}$.

The measurement set-up is shown on Figure 3. A polarisation controller is used to modify the state of polarisation of a fully polarised tunable laser source (TLS) such that the input linear SOP is at 45° between the modes x and y of the FBG. The Full-Width at Half-Maximum (FWHM) of the laser source is equal to 8 pm. A polarimeter (POL) measures the transmitted Stokes parameters versus wavelength, with a wavelength step of 10 pm to ensure a good compromise of time and accuracy. The polarimeter is also used to characterise the polarisation properties of the reflected signal owing to an optical circulator. In the experiment, the TLS has been tuned from 1533 to 1536 nm. The $O_x$ and Oy axes of the polarimeter are such that they correspond to the FBG eigenmodes.

As shown in Fig. 1, it is observed both by theory and experiment that the normalised Stokes parameters values slowly vary with wavelength in the transmission band whereas they change more significantly in the lateral bands. Concerning the reflected signal, $S_1$, $S_2$ and $S_3$ quickly vary with the wavelength around the minima of the power spectrum for both the theoretical and experimental curves. They vary in a smoother way within the reflection bands corresponding to the two eigenmodes.

Although the behaviour is qualitatively similar between the theoretical and experimental curves, some differences can be observed. Various reasons can explain these observations. First, when experimentally fixing the input SOP, the PC is optimised to confer the same reflected peak heights to the two eigenmodes. This method is visual and the input SOP is therefore not exactly at 45° between the two eigenmodes as supposed in the simulations. Secondly, the FBG parameters are not rigorously identical to those of the experimental grating. Moreover, due to the imperfections of the writing process and the high reflectivity of the grating, the reflected spectrum is not symmetrical, which can explain the asymmetry of the measured polarisation properties. There is also a residual length of polarisation maintaining fibre at both sides of the FBG, which is not taken into account in Eqs. (13) to (22).

Now the simulated and experimental evolutions of the Degree of Polarisation (DOP) with wavelength both in transmission and reflection are investigated. The degree of polarisation of the reflected signal is shown to be minimum every time the reflected spectrum is minimum.

The DOP is an important quantity to describe partially polarised light. It is defined as the ratio of the intensity of the totally polarised component to the total light intensity. It varies from zero for unpolarised light to unity for totally polarised light and takes intermediate values for partially polarised light. The DOP can be expressed in terms of Stokes parameters by :

$$DOP = \frac{\sqrt{S_1^2 + S_2^2 + S_3^2}}{S_0} \qquad (eq.23)$$

When experimentally measuring the DOP, the obtained value depends on the measurement time needed by the measurement device. Consequently, it is necessary to take into account the time in the expression of the DOP. Eq . (7) and (8) become :

$$E_t = \begin{pmatrix} E_{tx} \\ E_{ty} \end{pmatrix} = \begin{pmatrix} \tau_x M_x e^{j(\omega t + \theta_x)} \\ \tau_y M_y e^{j(\omega t + \theta_y)} \end{pmatrix} \qquad (eq.24)$$

$$E_r = \begin{pmatrix} E_{rx} \\ E_{ry} \end{pmatrix} = \begin{pmatrix} \rho_x M_x e^{j(\omega t + \theta_x)} \\ \rho_y M_y e^{j(\omega t + \theta_y)} \end{pmatrix} \qquad (eq.25)$$

In these equations, $\omega$ is the pulsation and t is the time. The Stokes parameters are now computed from Eqs. (24) and (25), which gives for the reflected signal : $S_0 = <|E_{rx}|^2> + <|E_{ry}|^2>$, $S_1 = <|E_{rx}|^2> - <|E_{ry}|^2>$, $S_2 = 2Re [<E_{rx}*E_{ry}>]$ and $S_3 = 2Im [<E_{rx}*E_{ry}>]$ . In these expressions, $<E_{rx}(y)>$ represents the mean value with time of the transmitted electric field along the mode x(mode y). Hence, using previous equations combined with the Stokes parameters expressions, it is possible to trace the evolution of the DOP with wavelength for both the transmitted and reflected signals. As previously, parameters values are used corresponding to the real FBG. In order to compare simulated and experimental results, also the FWHM of the tunable laser source used during the experiments is taken into account in the simulations.

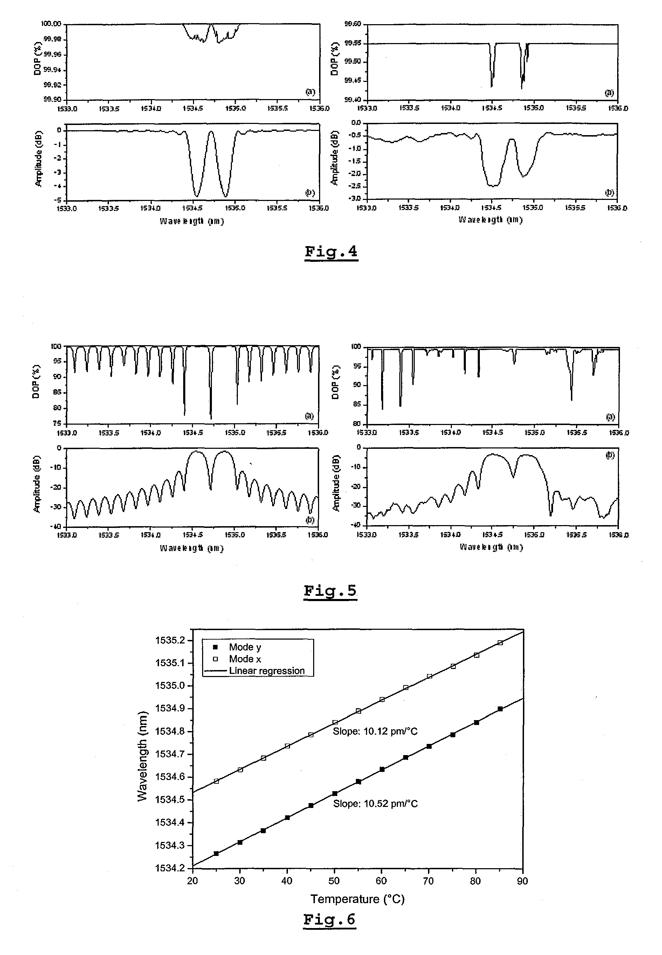

Figures 4 and 5 present the simulated and experimental evolution of the DOP with wavelength for the transmitted and reflected signals, respectively. The simulation is carried out with a wavelength step of 10 pm and considering a source FWHM of 8 pm and an integration time of the measurement device of 1 s. The angle of the input linear state of polarisation is fixed to 45° to confer the same relative contribution to the two peaks. The experimental measurement was made with the set-up described above. The accuracy on the measurement of high DOP (more than 90 %) is guaranteed by the manufacturer of the polarimeter to be within ± 0.5 %.

It is clear from Figures 4 and 5 that the DOP theoretically computed is in good agreement with the one experimentally measured. The DOP for the transmitted spectrum remains unchanged at a maximum value outside the rejection band of the grating. Within this band, it decreases a little. The DOP measured in reflection presents drops every time the reflected spectrum displays a minimum. These drops come from the fast variations of the normalised Stokes parameters around the wavelengths at which the reflected spectrum is minimum (see Fig. 2). Every wavelength of the source spectrum is indeed characterised by a very different SOP, which decreases the value of the DOP. Small differences in the amplitudes of the peaks appear between the simulated and experimental evolutions. They can be explained by the reasons put forward previously.

The evolution of the DOP in reflection, as shown in Fig.5, is particularly interesting for achieving new kinds of demodulation techniques for Bragg grating sensors. In fact, when temperature or strain affects the grating, all the reflected wavelengths shift. Since the DOP minima are correlated with the minima of the reflected spectrum, the monitoring of three DOP minima can be used to discriminate between strain and temperature effects.

Now a demodulation technique using the information contained in the evolution of the degree of polarization with wavelength is derived. By monitoring the evolution of three DOP minima in response to a change of temperature and strain, it is possible to discriminate between these two effects.

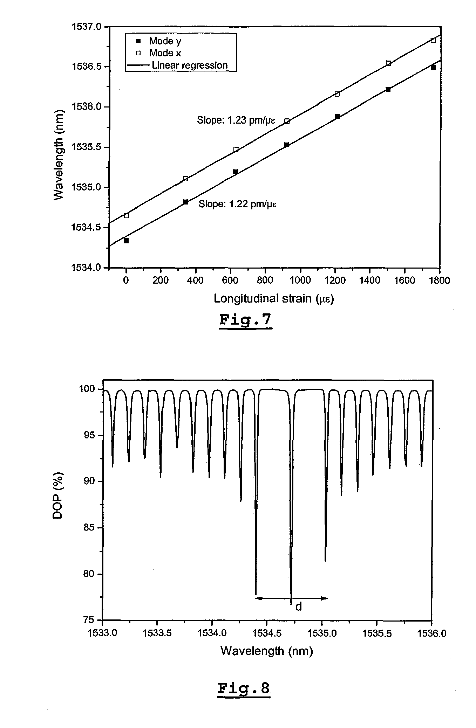

To characterise a FBG for temperature sensing, the grating is placed inside an oven regulated by a thermoelectric temperature controller. Temperature is accurately set up to 85°C. The fibre is held unstrained during the thermal coefficients measurement. Strain is applied by different loads placed at the end of the fibre containing the FBG. Temperature is kept at a constant value of 25°C during the strain coefficients measurement. The calibrations are performed using a tunable laser source, a wavemeter and an optical power meter. Figures 6 and 7 present the evolutions obtained from the calibration procedure. In response to a temperature change, the two main reflected peaks of the grating exhibit different sensitivities whereas they shift equally in response to a change of strain. This particular behaviour can be also found in the evolution of the degree of polarisation when the grating is submitted simultaneously to a change of temperature and strain.

Hence, the monitoring of the evolution of the central DOP minimum denoted $\lambda_{DOP}$ (corresponding to the minimum of the reflected spectrum between the two main peaks when a 45° linear polarisation state is injected into the grating) and the evolution of the distance d between two lateral DOP minima (see Figure 8) yield sufficient information to discriminate between (axial) strain and temperature. One thus obtains a system of two equations with two unknowns.

$$\begin{pmatrix} \Delta\lambda_{DOP} \\ \Delta d \end{pmatrix} = \begin{pmatrix} K_{T1} & K_{\varepsilon 1} \\ K_{T2} & K_{\varepsilon 2} \end{pmatrix} \begin{pmatrix} \Delta T \\ \Delta\varepsilon \end{pmatrix} \qquad (eq.\ 26)$$

where $\Delta T$ and $\Delta\varepsilon$ represent the shifts in temperature and strain, respectively. $K_T = \partial\lambda/\partial T)|_{\varepsilon=Cste}$ is determined by the thermo-optic coefficient and by the thermal expansion coefficient. $K_\varepsilon = \partial\lambda/\partial\varepsilon|_{T=Cste}$ is linked to both the Poisson ratio of the fibre and the photo-elastic coefficient. The K matrix coefficients can be experimentally determined by separately measuring the evolution of $\lambda_{DOP}$ and d in response to a change of temperature and strain, respectively. Once K is known and provided the matrix inversion is well conditioned, changes of strain and temperature can be obtained taking the inverse of Eq. (26). The measurement accuracy is closely linked to the accuracy of the source.

The use of gratings having different central wavelengths and written in cascade in the same polarisation maintaining fibre provides quasi-distributed measurements and a better use of the tunable laser source. With a source covering the C+L bands, the demodulation technique can be used to interrogate up to 25 gratings.

The advantages of the solution according to the invention are manifold. By exploiting the wavelength dependency of the polarisation properties of the reflected or transmitted signals by a fibre Bragg grating, FBG sensors can be obtained. Moreover, this can be achieved using a simple and low cost set-up. This further allows a good accuracy and is compatible with frequency multiplexing. It can also be applied in embedded systems. Consequently, the present invention can advantageously be applied in quasi-distributed sensing with Bragg gratings.

## Claims

**1.** Method for evaluating temperature and/or strain affecting a fibre Bragg grating (FBG), comprising the steps of

- determining the spectrum reflected by said FBG when launching light into said FBG,
- determining the degree of polarisation (DOP) for said reflected spectrum,
- selecting a first DOP minimum, being the DOP minimum located between the two main peaks in said reflected spectrum, a second and a third DOP minimum being the closest DOP minima at each side of said first DOP minimum,
- monitoring the evolution of said first DOP minimum and the evolution of the distance between said second and said third minimum in response to a change in temperature and/or strain,
- evaluating temperature and/or strain using information obtained from the previous step.

**2.** Method for evaluating temperature and/or strain as in claim 1, wherein the step of determining the DOP comprises the step of calculating the Stokes parameters.

**3.** Method for evaluating temperature and/or strain as in claim 1 or 2, wherein said reflected spectrum is obtained by using a tunable laser source.

**4.** Method for evaluating temperature and/or strain affecting a cascade of FBGs, wherein the steps of the method as in any of the previous claims are performed for each FBG of said cascade.

**5.** Method for evaluating temperature and/or strain as in any of the previous claims, wherein said strain is axial strain.

**6.** Method for temperature and/or strain sensing of a fibre comprising a FBG, comprising the steps of

- calibrating said FBG, and
- performing the steps of the method as in claim 1 or 2,

**7.** Method for temperature/strain sensing as in claim 6, wherein said calibration step comprises a temperature calibration and/or a strain calibration.

**8.** Method as in any of the previous claims, wherein the angle of the input linear state of polarisation of said light launched into said FBG, is 45°.

**Fig.1**

**Fig.2**

**Fig.3**

Fig.4

Fig.5

Fig.6

**Fig.7**

**Fig.8**

European Patent Office

**EUROPEAN SEARCH REPORT**

Application Number

EP 04 44 7207

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WO 99/32863 A (OPTOPLAN AS; KRINGLEBOTN, JON, THOMAS) 1 July 1999 (1999-07-01) * claims 1,2,5 * * figures 2,3 * | 1-8 | G01D5/353 |
| A | WO 86/01286 A (UNITED TECHNOLOGIES CORPORATION) 27 February 1986 (1986-02-27) * claim 1 * * figure 1 * | 4 | |
| D,A | PATENT ABSTRACTS OF JAPAN vol. 1999, no. 08, 30 June 1999 (1999-06-30) & JP 11 064119 A (FUJIKURA LTD), 5 March 1999 (1999-03-05) * abstract * | 1-8 | |
| A | US 2004/071400 A1 (HAROUD KARIM ET AL) 15 April 2004 (2004-04-15) * claims 1-4 * * figures 1,2 * | 1-8 | TECHNICAL FIELDS SEARCHED (Int.Cl.7) G01D |

The present search report has been drawn up for all claims

| Place of search | Date of completion of the search | Examiner |
|---|---|---|
| The Hague | 15 March 2005 | Moulara, G |

**ANNEX TO THE EUROPEAN SEARCH REPORT
ON EUROPEAN PATENT APPLICATION NO.**

EP 04 44 7207

This annex lists the patent family members relating to the patent documents cited in the above-mentioned European search report.
The members are as contained in the European Patent Office EDP file on
The European Patent Office is in no way liable for these particulars which are merely given for the purpose of information.

15-03-2005

| Patent document cited in search report | | Publication date | Patent family member(s) | | Publication date |
|---|---|---|---|---|---|
| WO 9932863 | A | 01-07-1999 | NO | 976012 A | 21-06-1999 |
| | | | AU | 1578699 A | 12-07-1999 |
| | | | EP | 1040330 A1 | 04-10-2000 |
| | | | WO | 9932863 A1 | 01-07-1999 |
| WO 8601286 | A | 27-02-1986 | DE | 3587641 D1 | 02-12-1993 |
| | | | DE | 3587641 T2 | 17-02-1994 |
| | | | DE | 192659 T1 | 18-12-1986 |
| | | | EP | 0192659 A1 | 03-09-1986 |
| | | | JP | 6007049 B | 26-01-1994 |
| | | | JP | 61502980 T | 18-12-1986 |
| | | | WO | 8601286 A1 | 27-02-1986 |
| | | | US | 4806012 A | 21-02-1989 |
| | | | US | 4761073 A | 02-08-1988 |
| JP 11064119 | A | 05-03-1999 | NONE | | |
| US 2004071400 | A1 | 15-04-2004 | DE | 10017946 A1 | 17-01-2002 |
| | | | AU | 4221801 A | 23-10-2001 |
| | | | EP | 1272816 A1 | 08-01-2003 |
| | | | WO | 0177623 A1 | 18-10-2001 |

EPO FORM P0459

For more details about this annex : see Official Journal of the European Patent Office, No. 12/82